(19) Europäisches Patentamt / European Patent Office / Office européen des brevets

(11) **EP 4 438 537 A1**

(12) **EUROPEAN PATENT APPLICATION**
published in accordance with Art. 153(4) EPC

(43) Date of publication:
**02.10.2024 Bulletin 2024/40**

(21) Application number: **22915929.8**

(22) Date of filing: **22.12.2022**

(51) International Patent Classification (IPC):
**B65H 29/04** (2006.01)    **B65H 29/28** (2006.01)
**B65H 45/101** (2006.01)    **B65H 45/107** (2006.01)

(52) Cooperative Patent Classification (CPC):
**B65H 29/04; B65H 29/28; B65H 45/101;**
**B65H 45/107**

(86) International application number:
**PCT/JP2022/047496**

(87) International publication number:
**WO 2023/127706 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 JP 2021214553**

(71) Applicant: **Zuiko Corporation
Ibaraki-shi
Osaka 5670082 (JP)**

(72) Inventor: **HIROYASU, Masato
Ibaraki-shi, Osaka 567-0082 (JP)**

(74) Representative: **Hasegawa, Kan
Patentanwaltskanzlei Hasegawa
Untere Hauptstraße 56
85354 Freising (DE)**

(54) **METHOD AND DEVICE FOR STORING STRETCHABLE SHEET**

(57)    The present invention folds and stacks a stretchable sheet while conveying the stretchable sheet in a stretched state.

The present invention comprises: a first conveying step in which a stretchable sheet (2) is conveyed in a stretched state to an stretchable sheet discharger (32) using conveyance rollers (21b, 31g) that define the conveyance speed $V_1$, $V_2$ of the stretchable sheet (2); and a second conveying step in which the stretchable sheet discharger (32) conveys the stretchable sheet (2) from an introduction port (32s) to a discharge port (32t) of the stretchable sheet discharger (32) while clamping both sides of the stretchable sheet (2) in the first direction, and the discharge port (32t) of the stretchable sheet discharger (32) reciprocates in the first direction to fold and stack the discharged stretchable sheet (2e) from the discharge port (32t) of the stretchable sheet discharger (32). The conveyance speed $V_3$ when the stretchable sheet discharger (32) conveys the stretchable sheet (2) is smaller than the conveyance speed $V_1$, $V_2$ when the conveyance rollers (21b, 31g) convey the stretchable sheet (2).

Fig. 1

EP 4 438 537 A1

## Description

## TECHNICAL FIELD

The present invention relates to a method and a device for storing a stretchable sheet, and more specifically, relates to a technique for folding and stacking the stretchable sheet.

## BACKGROUND ART

For example, a stretchable sheet is known that is formed by stretching a resin film having stretchability in a conveyance direction and laminating another sheet member on the stretched resin film (for example, see Patent Literature 1).

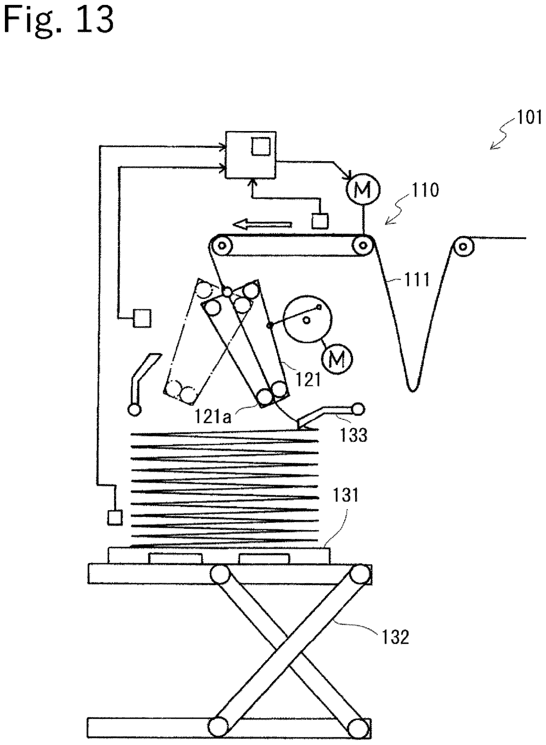

Moreover, a device is known that folds and stacks sheets. Fig. 13 is a schematic view of such a device 101. As shown in Fig. 13, in this device 101, an elongated rubber sheet 111 conveyed by a conveyor 110 passes through a stretchable sheet discharger 121 swung by a crank mechanism, is discharged from between a pair of rollers 121a at the exit side end of the stretchable sheet discharger 121, and is folded to a predetermined length and stacked on top of a pallet 131. The pallet 131 is disposed on a raising/lowering device 132, and is lowered when the rubber sheet 111 is stacked. A folding flap 133 holds down the rubber sheet to assist in folding the rubber sheet (for example, see Patent Literature 2).

## CITATION LIST

## PATENT LITERATURE

[Patent Literature 1] WO 2020/090753 A1
[Patent Literature 2] JP 2012-236704 A

## SUMMARY OF THE INVENTION

## PROBLEM TO BE SOLVED BY THE INVENTION

The inventor of the present application conceived of producing a stretchable sheet as in Patent Literature 1 and to temporarily store the produced stretchable sheet, discharging the stretchable sheet from the swinging stretchable sheet discharger and folding and stacking the stretchable sheet as in Patent Literature 2.

However, the stretchable sheet is produced in a stretched state, and by the stretched state being released, the sheet member undulates, so that irregularities are formed on the surface of the stretchable sheet. When the stretchable sheet is released from the stretched state and conveyed by the stretchable sheet discharger, the irregularities formed on the surface of the stretchable sheet are flattened.

On the other hand, the inventor was faced with the following new problem: If the stretchable sheet is conveyed by the stretchable sheet discharger while remaining in the stretched state, the stretchable sheet rapidly shrinks when it is discharged from the stretchable sheet discharger, and the stretchable sheet becomes entangled with the conveyer, so that it is impossible to discharge the stretchable sheet in a zigzag state.

In view of such circumstances, a problem to be solved by the present invention is to provide a stretchable sheet storing method and device capable of folding and stacking a stretchable sheet while conveying it in a stretched state.

## MEANS FOR SOLVING THE PROBLEM

To solve the above-mentioned problem, the present invention provides a stretchable sheet storing method structured as follows:

A stretchable sheet storing method is provided with: (i) a first conveying step in which a stretchable sheet is conveyed in a stretched state to an stretchable sheet discharger by using a conveyance roller that defines a conveyance speed of the stretchable sheet; and (ii) a second conveying step in which the stretchable sheet discharger conveys the stretchable sheet from an introduction port to a discharge port of the stretchable sheet discharger while holding both sides of the stretchable sheet in a first direction, and the discharge port of the stretchable sheet discharger reciprocates in the first direction to fold and stack the stretchable sheet discharged from the discharge port of the stretchable sheet discharger. The conveyance speed when the stretchable sheet discharger conveys the stretchable sheet while holding the stretchable sheet in the second conveying step is lower than the conveyance speed when the conveyance roller conveys the stretchable sheet in the first conveying step.

With the above-described method, the rapid shrinkage of the stretchable sheet at the time of discharge from the discharge port of the stretchable sheet discharger is suppressed to allow the stretchable sheet to be discharged in a stable state from the discharge port of the stretchable sheet discharger in a desired direction, so that the stretchable sheet can be folded and stacked below the discharge port of the stretchable sheet discharger.

Preferably, in the first conveying step, the stretchable sheet is conveyed along a conveyance path of the stretchable sheet by using a plurality of said conveyance rollers arranged with spacing between them, and a conveyance speed at which the conveyance roller on a downstream side in a conveyance direction conveys the stretchable sheet is made lower than a conveyance speed at which the conveyance roller on an upstream side in the conveyance direction conveys the stretchable sheet.

In this case, it is easy to increase the conveyance speed of the stretchable sheet on the upstream side of the stretchable sheet discharger.

Preferably, in the second conveying step, the discharge port of the stretchable sheet discharger reciprocates in the first direction, and reciprocates in a third direction crossing the first direction and a second direction in which the stretchable sheet is conveyed while being held by the stretchable sheet discharger.

In this case, the range where the stretchable sheet is folded and stacked is increased, so that the stretchable sheet can be stored in a larger amount.

Preferably, the stretchable sheet storing method is further provided with: (iii) a stretchable film forming step in which a resin film having elasticity is formed by extruding an elastic resin material whose main component is a thermoplastic elastic resin, in a state of being heated and melted and the stretchable sheet is formed by laminating the resin film in the stretched state and a sheet member.

In this case, the stretchable sheet can be continuously formed, folded and stacked.

Preferably, in the stretchable sheet forming step, the resin film in the stretched state and the sheet member are intermittently welded.

In this case, a stretchable sheet can be formed where the sheet member undulates when the stretched state is released.

Preferably, in the stretchable sheet forming step, the stretchable sheet is formed by laminating the resin film and two of said sheet members so that the resin film is disposed between the sheet members.

In this case, the outer appearances of both sides of the stretchable sheet can be made the same.

In addition, to solve the above-mentioned problem, the present invention provides a stretchable sheet storing device structured as follows:

A stretchable sheet storing device is provided with: (a) a conveyance roller that conveys a stretchable sheet and defines a conveyance speed of the stretchable sheet; and (b) a stretchable sheet discharger that has an introduction port into which the stretchable sheet conveyed by the conveyance roller is introduced and a discharge port from which the stretchable sheet is discharged, and conveys the stretchable sheet from the introduction port to the discharge port while holding both sides of the stretchable sheet in a first direction, the discharge port reciprocating in the first direction so that the stretchable sheet discharged from the discharge port is folded and stacked. A conveyance speed at which the stretchable sheet discharger conveys the stretchable sheet is lower than a conveyance speed at which the conveyance roller conveys the stretchable sheet.

With the above-described structure, the rapid shrinkage of the stretchable sheet at the time of discharge from the discharge port of the stretchable sheet discharger is suppressed to allow the stretchable sheet to be discharged in a stable state from the discharge port of the stretchable sheet discharger in a desired direction, so that the stretchable sheet can be folded and stacked below the discharge port of the stretchable sheet discharger.

Preferably, a plurality of said conveyance rollers are arranged with spacing between them, and a conveyance speed at which the conveyance roller on a downstream side in a conveyance direction conveys the stretchable sheet is lower than a conveyance speed at which the conveyance roller on an upstream side in the conveyance direction conveys the stretchable sheet.

In this case, it is easy to increase the conveyance speed of the stretchable sheet on the upstream side of the stretchable sheet discharger.

Preferably, the discharge port of the stretchable sheet discharger reciprocates in the first direction and reciprocates in a third direction crossing the first direction and a second direction in which the stretchable sheet is conveyed while being held by the stretchable sheet discharger.

In this case, since the range where the stretchable sheet is folded and stacked is increased, the stretchable sheet can be stored in a larger amount.

Preferably, the stretchable sheet includes: a resin film formed of an elastic resin material whose main component is a thermoplastic elastic resin and having elasticity; and a sheet member, the resin film and the sheet member being laminated.

In this case, the stretchable sheet can be continuously formed, folded and stacked.

Preferably, in the stretchable sheet, the resin film and the sheet member are intermittently welded.

In this case, in the stretchable sheet, the sheet member undulates when the stretched state is released.

Preferably, in the stretchable sheet, the resin film is disposed between two said sheet members.

In this case, the outer appearances of both sides of the stretchable sheet can be made the same.

## EFFECTS OF THE INVENTION

According to the present invention, the stretchable sheet can be folded and stacked while being conveyed in a stretched state.

## BRIEF DESCRIPTION OF THE DRAWINGS

[Figure 1] Fig. 1 is a schematic view showing the overall structure (first embodiment).
[Figure 2] Fig. 2 is a schematic relevant part view of a stretchable sheet producing device (first embodiment).
[Figure 3] Fig. 3 is a cross-sectional view of a stretchable sheet (first embodiment).
[Figure 4] Fig. 4 is a schematic front view of a stretchable sheet storing device (first embodiment).
[Figure 5] Fig. 5 is a schematic side view along the line A-A of Fig. 4 (first embodiment).
[Figure 6] Fig. 6 is a schematic view along the line B-B of Fig. 5 (first embodiment).
[Figure 7] Fig. 7 is a schematic top view along the line C-C of Fig. 5 (first embodiment).
[Figure 8] Fig. 8 is a schematic partial cross-sectional view along the line D-D of Fig. 7 (first embodiment).
[Figure 9] Fig. 9 is a schematic relevant part view of the stretchable sheet storing device (first embodiment).
[Figure 10] Fig. 10 is a schematic relevant part view of the stretchable sheet storing device (first embodiment).
[Figure 11] Fig. 11 is a timing chart showing the operation of the stretchable sheet storing device (first embodiment).
[Figure 12] Fig. 12 is a schematic view along the line X-X of Fig. 10 (first embodiment).
[Figure 13] Fig. 13 is a schematic view of the stretchable sheet storing device (first conventional example).

## MODE FOR CARRYING OUT THE INVENTION

Hereinafter, an embodiment of the present invention will be described with reference to the drawings.

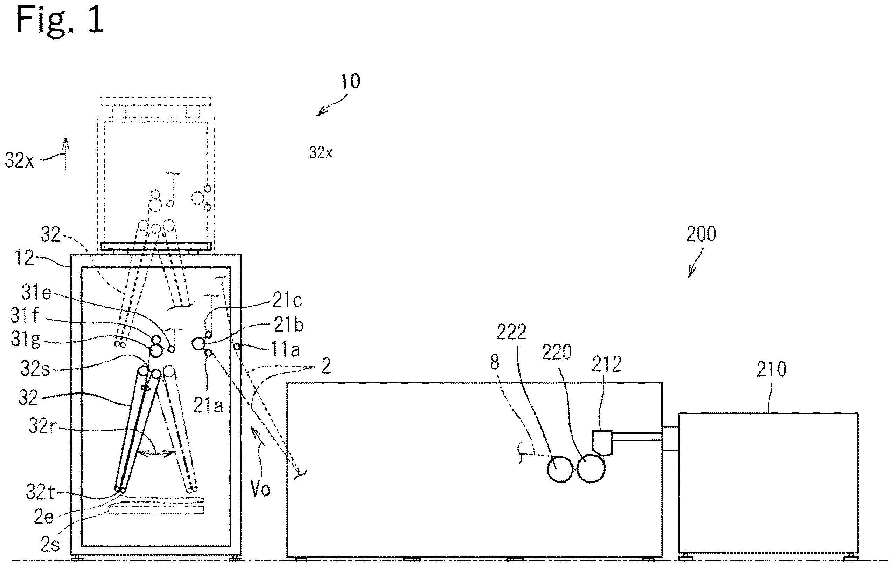

[First embodiment] A stretchable sheet storing method and device of a first embodiment will be described with reference to Figs. 1 to 12.

Fig. 1 is a schematic view showing the overall structure. As shown in Fig. 1, to a stretchable sheet storing device 10, a sheet that is stretchable, or a stretchable sheet 2 is supplied in a stretched state from a stretchable sheet producing device 200.

In the stretchable sheet storing device 10, a plurality of rollers including conveyance rollers 21b and 31g (in Fig. 1, some rollers 11a, 21a to 21c and 31e to 31g are shown) are disposed along the conveyance path of the stretchable sheet 2. The conveyance rollers 21b and 31g which are rotated by a motor receive and convey the stretchable sheet 2, and define the conveyance speed of the stretchable sheet 2. That is, the conveyance rollers 21b and 31g convey the stretchable sheet 2 in contact with the outer peripheral surfaces of the conveyance rollers 21b and 31g, at conveyance speeds the same as the peripheral speeds of the conveyance rollers 21b and 31g.

The stretchable sheet storing device 10 is further provided with a stretchable sheet discharger 32. The stretchable sheet discharger 32 has an introduction port 32s into which the stretchable sheet 2 conveyed by the conveyance rollers 21b and 31g is introduced and a discharge port 32t from which the stretchable sheet 2 is discharged, and conveys the stretchable sheet 2 from the introduction port 32s to the discharge port 32t while holding both sides of the stretchable sheet 2. The stretchable sheet discharger 32 swings in the direction indicated by the arrow 32r, and reciprocates between the position indicated by the solid line and the position indicated by the chain line. This reciprocates the discharge port 32t of the stretchable sheet discharger 32 in a direction in which both sides of the stretchable sheet 2 are held, a stretchable sheet 2e continuously discharged from the discharge port 32t is zigzagged, and a stretchable sheet 2s is folded and stacked on a non-illustrated pallet disposed below the discharge port 32t of the stretchable sheet discharger 32.

The stretchable sheet 2 is produced by the stretchable sheet producing device 200, and is fed to the stretchable sheet storing device 10. When the conveyance speed of the stretchable sheet 2 when the stretchable sheet 2 is fed from the stretchable sheet producing device 200 to the stretchable sheet storing device 10 is $V_0$, the peripheral speed of the conveyance roller 21b on the upstream side in the conveyance direction, that is, the conveyance speed at which the conveyance roller 21b conveys the stretchable sheet 2 is $V_1$, the peripheral speed of the conveyance roller 31g on the downstream side, that is, the conveyance speed at which the conveyance roller 31g conveys the stretchable sheet 2 is $V_2$ and the conveyance speed at which the stretchable sheet discharger 32 conveys the stretchable sheet 2 is $V_3$, the conveyance rollers 21b and 31g and the stretchable sheet discharger 32 are driven so that the following expression 1 is satisfied:

$$V_0 > V_1 > V_2 > V_3 \quad \text{(expression 1)}$$

For example, the conveyance rollers 21b and 31g and the stretchable sheet discharger 32 drive so that the following expressions 2 to 4 are satisfied:

$$V_1 = 0.8 \ X \ V_0 \quad \text{(expression 2)}$$

$$V_2 = 0.6 \ X \ V_0 \quad \text{(expression 3)}$$

$$V_3 = 0.5 \ X \ V_0 \quad \text{(expression 4)}$$

By making the conveyance speed $V_3$ at which the stretchable sheet discharger 32 conveys the stretchable sheet 2 lower than the conveyance speeds $V_1$ and $V_2$ at which the conveyance rollers 21b and 31g convey the stretchable sheet 2, the stretch ratio of the stretchable sheet 2 when the stretchable sheet 2 is conveyed by the stretchable sheet discharger 32 can be made lower than the stretch ratio of the stretchable sheet 2 when the stretchable sheet storing device 10 receives the stretchable sheet 2 from the stretchable sheet producing device 200. The stretch ratio is defined by, for example, $\Delta L/L$ when the natural length when no tension acts externally is L and the length when tension acts to stretch stretchable sheet 2 from the natural length is $L+\Delta L$. The lower the stretch ratio is, the lower the tension acting on the stretchable sheet 2 is.

Since the stretchable sheet discharger 32 conveys the stretchable sheet 2 with a stretch ratio lower than that when the stretchable sheet 2 is fed to the stretchable sheet storing device 10, the tension of the stretchable sheet 2 released at the time of discharge from the discharge port 32t of the stretchable sheet discharger 32 can be made low. When the tension of the stretchable sheet 2 released at the time of discharge from the discharge port 32t of the stretchable sheet discharger 32 is made low, the rapid shrinkage of the stretchable sheet 2e at the time of discharge from the discharge port 32t of the stretchable sheet discharger 32 is suppressed to allow the stretchable sheet 2e to be discharged in a stable state from the discharge port 32t of the stretchable sheet discharger 32 in a desired direction, so that the stretchable sheet 2s can be folded and stacked on top of the non-illustrated pallet disposed below the discharge port 32t of the stretchable sheet discharger 32.

It is essential for the stretchable sheet storing device 10 to have at least one conveyance roller 21b and the stretchable sheet discharger 32. The other rollers may be omitted.

In the case where the stretchable sheet storing device 10 has a plurality of conveyance rollers 21b and 31g, the conveyance rollers 21b and 31g are arranged with spacing between them and the conveyance speed $V_2$ at which the conveyance roller 31g on the downstream side in the conveyance direction conveys the stretchable sheet 2 is made lower than the conveyance speed $V_1$ at which the conveyance roller 21b on the upstream side in the conveyance direction conveys the stretchable sheet 2. Since this makes the tension of the stretchable sheet 2 decrease stepwise, the conveyance of the stretchable sheet 2 is easy to stabilize. This makes it easy to increase the conveyance speeds $V_0$, $V_1$ and $V_3$ of the stretchable sheet 2 on the upstream side of the stretchable sheet discharger 32. Consequently, it is easy to increase the conveyance speed of the stretchable sheet 2 to increase production efficiency.

The stretchable sheet discharger 32 and the like of the stretchable sheet storing device 10 are raised to the position indicated by the broken line and protrude from a main body frame 12 as indicated by the arrow 32x. This allows the stretchable sheet 2s to be stacked higher. Instead of the stretchable sheet discharger 32 and the like being raised, the placement part where the stretchable sheet 2s is folded and stacked may be lowered, or the placement part may be kept stopped.

While details will be provided later, it is preferable for the stretchable sheet discharger 32 to reciprocate also in a direction perpendicular to the paper in Fig. 1. In this case, while reciprocating in a first direction in which both sides of the stretchable sheet 2 is held, the discharge port 32t of the stretchable sheet discharger 32 reciprocates in a third direction crossing the first direction and a second direction in which the stretchable sheet 2 is conveyed while being held by the stretchable sheet discharger. Since this increases the range where the stretchable sheet 2s is folded and stacked, the stretchable sheet 2s can be stored in a larger amount.

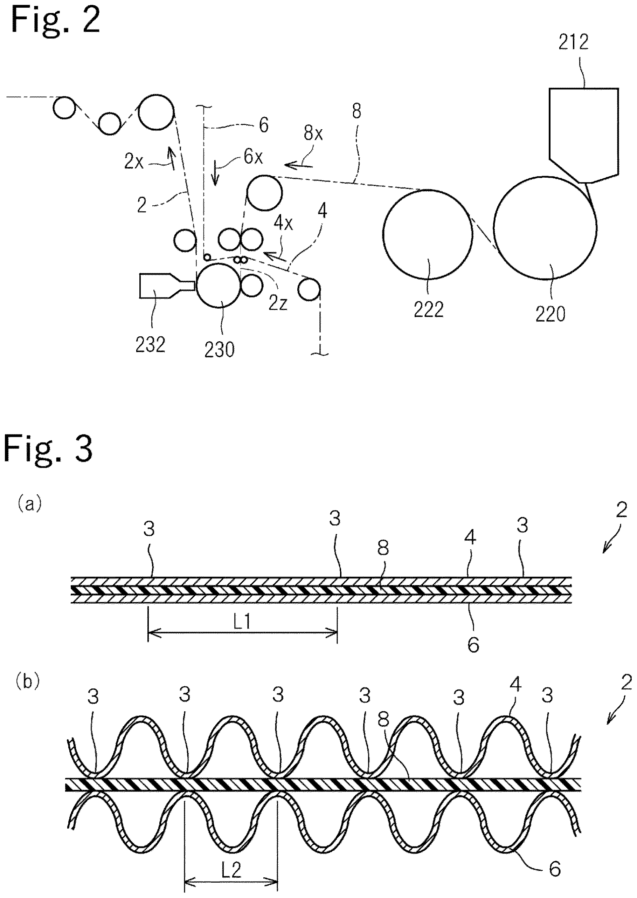

Fig. 2 is a schematic relevant part view of the stretchable sheet producing device 200. As shown in Figs. 1 and 2, the stretchable sheet producing device 200 heats and melts an elastic resin material whose main component is a thermoplastic elastic region having elasticity with an extruder 210, extrudes it into a flat shape from the discharge port of a die 212, and cools it through cooling rollers 220 and 222, thereby forming a resin film 8. Then, the stretchable sheet producing device 200 stretches the resin film 8 in the conveyance direction 8x, and disposes and laminates the stretched resin film 8 between two sheet-form sheet members 4 and 6 conveyed in the directions of the arrows 4x and 6x, thereby forming a laminate 2z. The sheet members 4 and 6 are, for example, nonwoven fabric sheets. Then, the stretchable sheet producing device 200 conveys the laminate 2z along an anvil roller 230, and welds the stretched resin film 8 and the sheet members 4 and 6 together by using an ultrasonic horn 232. The stretchable sheet 2 may be formed by welding by heat sealing instead of by the ultrasonic horn 232. The stretchable sheet 2 is conveyed in the direction indicated by the arrow 2x with the resin film 8 remaining stretched, and is fed to the stretchable sheet storing device 10 with the resin film 8 remaining stretched.

Fig. 3 (a) is a schematic cross-sectional view of the stretchable sheet 2 formed by the stretchable sheet producing device 200. By the periodical welding using the ultrasonic horn 232, as shown in Fig. 3 (a), bonded parts 3 where the resin film 8 and the sheet members 4 and 6 are bonded together are formed with a distance L1 between them in the stretchable sheet 2.

Fig. 3 (b) is a schematic cross-sectional view of the stretchable sheet 2 when the stretched state is released. As shown in Fig. 3 (b), when the stretched state is released, the resin film 8 shrinks to make the distance L2 between the bonded parts 3 shorter than the distance L1 in the stretched state, so that the sheet members 4 and 6 undulate.

Since the resin film 8 is formed of the elastic resin material whose main component is the thermoplastic elastic resin having elasticity and has elasticity, the stretchable sheet 2 released from the stretched state stretches when it is pulled, and shrinks when it is stopped being pulled. That is, the stretchable sheet 2 is stretchable.

While the stretchable sheet 2 may have a structure where the sheet member 4 or 6 is disposed and laminated only on one side of the resin film 8, the outer appearances of both sides of the stretchable sheet 2 are made the same when the resin film 8 is disposed and laminated between the two sheet members 4 and 6 as shown in Fig. 3.

At the start of the production of the stretchable sheet 2, first, only the sheet members 4 and 6 are conveyed at the stretchable sheet producing device 200 and the stretchable sheet storing device 10. At this time, in order that the sheet members 4 and 6 are conveyed stably, the speed of conveyance of the sheet members 4 and 6 by the stretchable sheet discharger 32 and the speed of conveyance of the sheet members 4 and 6 by the conveyance rollers 21b and 31g are adjusted so that tension is generated on the sheet members 4 and 6. Then, the formation of the resin film 8 is started at the stretchable sheet producing device 200, and the resin film 8 is sandwiched between the sheet members 4 and 6 to form the stretchable sheet 2.

During the time from when the production of the stretchable sheet 2 is started at the stretchable sheet producing device 200 to when the steady operation state is reached, the speed $V_3$ of conveyance of the stretchable sheet 2 by the stretchable sheet discharger 32 is made lower than the speeds $V_1$ and $V_2$ of conveyance of the stretchable sheet 2 by the conveyance rollers 21b and 31g as in the steady operation state.

Before the start of the steady operation, only the two sheet members 4 and 6 are conveyed before the resin film 8 is extruded, and in this state, preferably, the conveyance speeds $V_0$, $V_1$, $V_2$ and $V_3$ of the conveyance rollers and the like are the same and the tension acting on the sheet members 4 and 6 at the stage of being fed to the stretchable sheet storing device 10 is higher than that at the time of the steady operation. This is in order to prevent the following: The stretchable sheet 2 has no stretchability in a state where no resin film 8 is present because it includes only the two sheet members 4 and 6, and if the conveyance speeds $V_0$, $V_1$, $V_2$ and $V_3$ of the conveyance rollers and the like are different, the sheet members 4 and 6 sag and become entangled with the conveyance rollers and the like.

Next, a stretchable sheet storing method will be described. The stretchable sheet storing method is provided with a first and second conveying steps.

In the first conveying step, the stretchable sheet 2 is received in the stretched state, and conveyed to the stretchable sheet discharger 32. At this time, the stretchable sheet 2 is conveyed by using the conveyance rollers 21b and 31g that define the conveyance speed of the stretchable sheet 2.

In the second conveying step, the stretchable sheet discharger 32 conveys the stretchable sheet 2 from the introduction port 32s to the discharge port 32t of the stretchable sheet discharger 32 while holding both sides of the stretchable sheet 2, and folds and stacks the stretchable sheet 2s discharged from the discharge port 32t of the stretchable sheet discharger 32 by reciprocating the discharge port 32t of the stretchable sheet discharger 32 in the first direction in which both side of the stretchable sheet 2 is held. At this time, the conveyance speed $V_3$ at which the stretchable sheet discharger 32 conveys the stretchable sheet 2 while holding the stretchable sheet 2 is made lower than the conveyance speeds $V_1$ and $V_2$ at which the conveyance rollers 21b and 31g convey the stretchable sheet 2 in the first step.

By making the conveyance speed $V_3$ at which the stretchable sheet discharger 32 conveys the stretchable sheet 2 lower than the conveyance speeds $V_1$ and $V_2$ at which the conveyance rollers 21b and 31g convey the stretchable sheet 2 as described above, the tension of the stretchable sheet 2 released at the time of discharge from the discharge port 32t of the stretchable sheet discharger 32 can be decreased. By decreasing the tension of the stretchable sheet 2 released when the stretchable sheet 2 is discharged from the discharge port 32t of the stretchable sheet discharger 32, the rapid shrinkage of the stretchable sheet 2e at the time of discharge from the discharge port 32t of the stretchable sheet discharger 32 is inhibited to allow the stretchable sheet 2e to be discharged in a stable state in a desired direction from the discharge port 32t of the stretchable sheet discharger 32, so that the stretchable sheet 2 can be folded and stacked below the discharge port 32t of the stretchable sheet discharger 32.

In the first conveying step, the stretchable sheet 2 is conveyed along the conveyance path of the stretchable sheet 2 by a plurality of conveyance rollers 21b and 31g arranged with spacing between them, and the conveyance speed $V_2$ at which the conveyance roller 31g on the downstream side in the conveyance direction conveys the stretchable sheet 2 is made lower than the conveyance speed $V_1$ at which the conveyance roller 21b on the upstream side in the conveyance direction conveys the stretchable sheet 2. Since this decreases the tension of the stretchable sheet 2 stepwise, the conveyance speed on the upstream side of the stretchable sheet 2 is easily increased, so that the production efficiency of the stretchable sheet 2 increases.

In the second conveying step, the discharge port 32t of the stretchable sheet discharger 32 is reciprocated, while being reciprocated in the first direction, in the third direction crossing the first direction and the second direction in which the stretchable sheet 2 is conveyed while being held by the stretchable sheet discharger 32. In this case, the stretchable sheet 2s can be stored in a larger amount because the range where the stretchable sheet 2s is folded and stacked is increased.

The stretchable sheet storing method is further provided with: (iii) a stretchable film forming step in which the resin film 8 is formed by extruding an elastic resin material whose main component is a thermoplastic elastic resin having elasticity, in a state of being heated and melted and the stretchable sheet 2 is formed by laminating the resin film 8 in the stretched state and the sheet-form sheet members 4 and 6.

In this case, the stretchable sheet 2 can be continuously formed, folded and stacked.

In the stretchable sheet forming step, the resin film 8 in the stretched state and the sheet members 4 and 6 are intermittently welded. In this case, a stretchable sheet can be formed where the sheet members 4 and 6 undulate when the stretched state is released.

In the stretchable sheet forming step, the stretchable sheet 2 is formed by laminating the resin film 8 and the sheet members 4 and 6 so that the resin film 8 is disposed between the two sheet members 4 and 6. In this case, the outer appearances of both sides of the stretchable sheet 2 can be made the same.

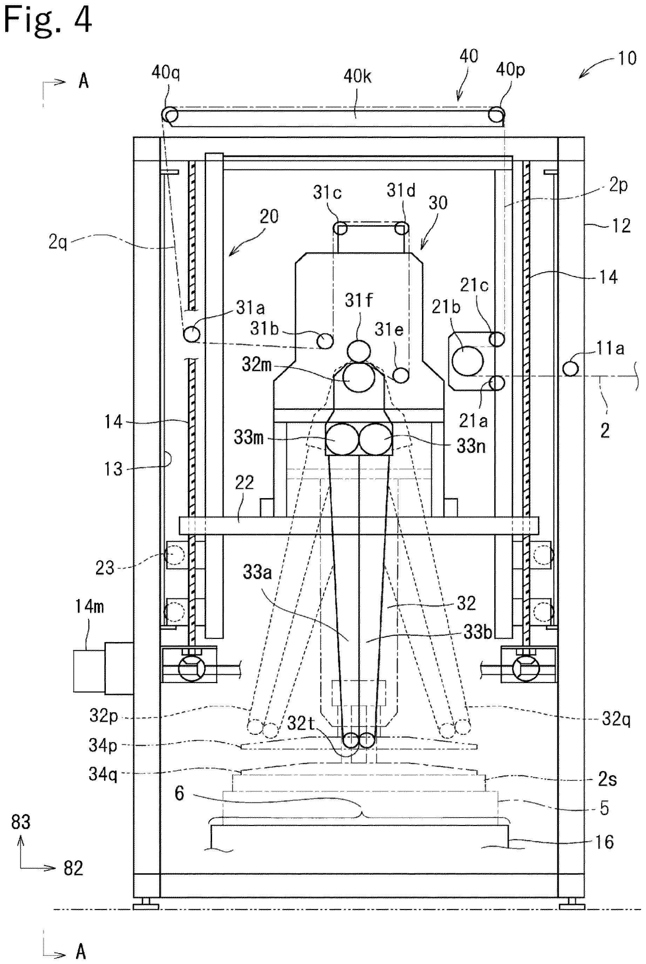

Hereinafter, the stretchable sheet storing device 10 will be described in more detail with reference to Figs. 4 to 12.

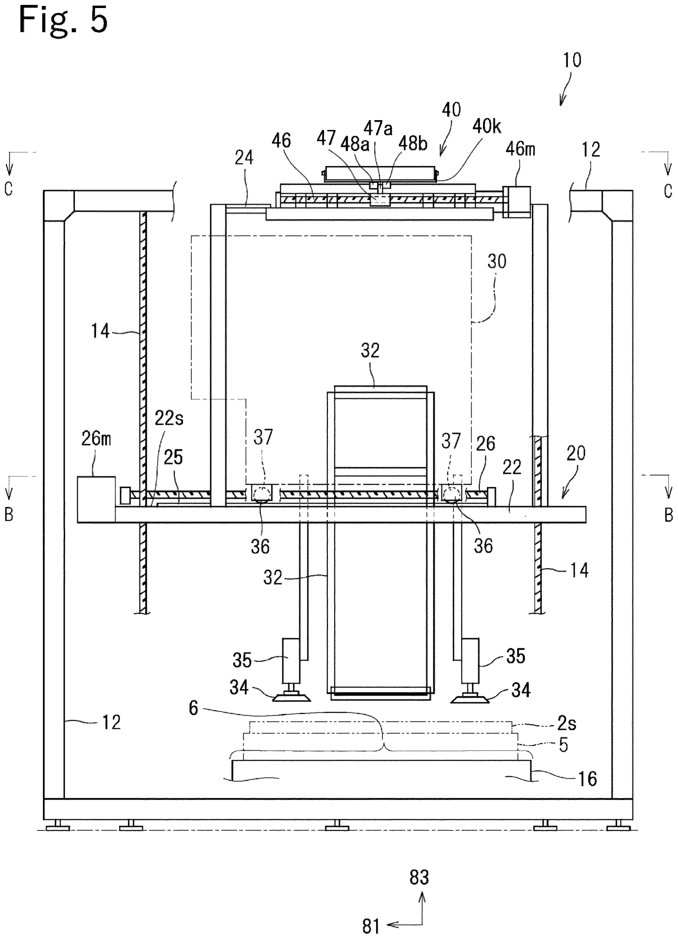

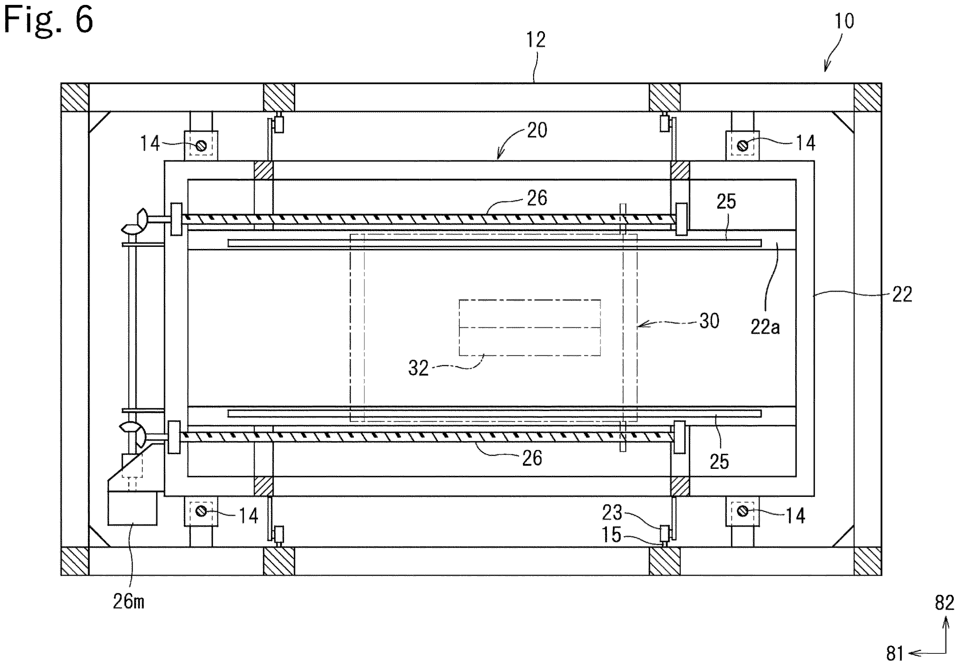

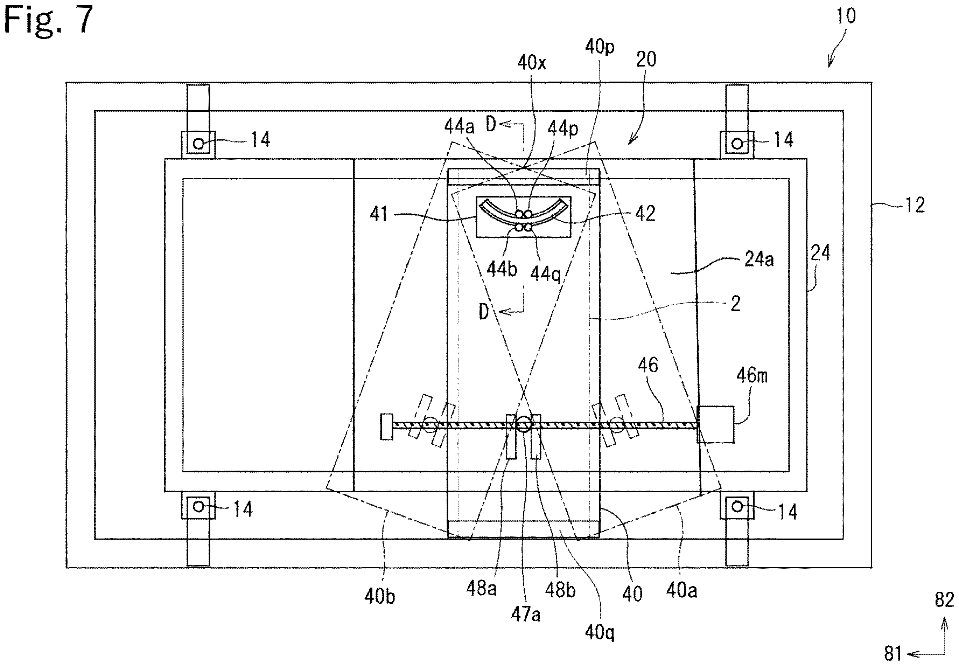

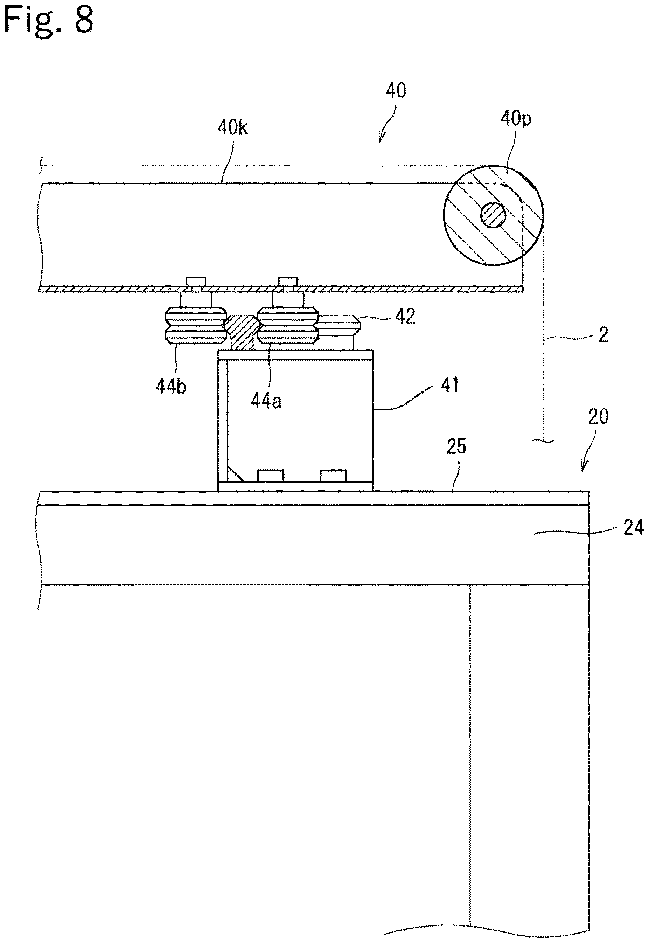

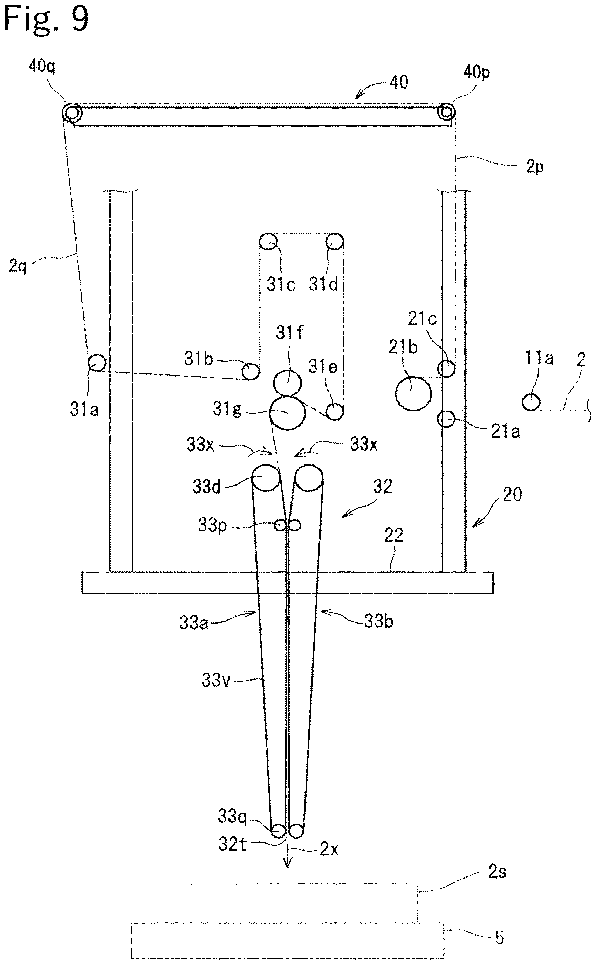

Fig. 4 is a schematic front view of the stretchable sheet storing device 10. Fig. 5 is a schematic side view along the line A-A of Fig. 4. Fig. 6 is a schematic view along the line B-B of Fig. 5. Fig. 7 is a schematic top view along the line C-C of Fig. 5, and shows a track shifter 40 in perspective view. Fig. 8 is a schematic partial cross-sectional view along the line D-D of Fig. 7. Fig. 9 is a schematic relevant part view of the stretchable sheet storing device 10.

As shown in Figs. 4 to 9, the stretchable sheet storing device 10 is provided with a first movement unit 20, a second movement unit 30 and the stretchable sheet discharger 32. A pallet placement device 16 for disposing a pallet 5 in a placement region 6, the first movement unit 20, the second movement unit 30, the stretchable sheet discharger 32 and the like are disposed inside the main body frame 12 of the stretchable sheet storing device 10.

While details will be provided later, the stretchable sheet storing device 10 folds the stretchable sheet discharged from the stretchable sheet discharger 32 and stacks it on top of the pallet 5 disposed in the placement region 6. The pallet placement device 16 conveys the pallet 5 with the stretchable sheet stacked thereon from the placement region 6 to a non-illustrated taking-out position. The placement region 6 is a predetermined region where the pallet 5 is placed when the stretchable sheet discharged from the stretchable sheet discharger 32 is folded and stacked on top of the pallet 5.

The stretchable sheet storing device 10 conveys the stretchable sheet 2 continuous in the longitudinal direction, and folds and stacks the stretchable sheet 2 on top of the pallet 5. The stretchable sheet 2 is a single or multiple layer sheet, for example, a multiple layer sheet where a resin film having stretchability is sandwiched between two nonwoven fabric sheets and the resin film and the nonwoven fabric sheets are bonded together.

The first movement unit 20 is disposed above the placement region 6, and is raised/lowered along the main body frame 12 in a third direction 83 facing the placement region 6 as indicated by the arrow 83. Specifically, a first screw shaft 14 extending in the third direction 83 is rotatably supported by the main body frame 12, and a movement member 22 of the first movement unit 20 engages with the first screw shaft 14. The first screw shaft 14 is rotated by a first motor 14m, whereby the movement member 22 of the first movement unit 20 moves parallel in the third direction 83. A wheel 23 rotatably supported by the first movement unit 20 engages with a first rail 13 fixed to the main body frame 12 and extending in the third direction 83, and moves along the first rail 13.

The track shifter 40 is disposed to be swingable above the first movement unit 20. The track shifter 40 is disposed above the second movement unit 30. A reception roller 40p that receives the stretchable sheet 2 is rotatably supported by one end of a frame 40k of the track shifter 40 which frame 40k is U-shaped in cross section, and a discharge roller 40q that discharges the received stretchable sheet 2 is rotatably supported by the other end of the frame 40k.

The first movement unit 20 supports a plurality of first rollers 21a to 21c. These first rollers 21a to 21c define a first conveyance path 2p where the stretchable sheet 2 guided by a guide roller 11a supported by the main body frame 12 is conveyed to the reception roller 40p of the track shifter 40.

The second movement unit 30 is supported by the first movement unit 20, and reciprocates along the placement region 6 in a first direction 81 indicated by the arrow 81. Specifically, as shown in Figs. 5 and 6, a pair of second rails 25 are fixed to an upper surface 22a of the horizontally extending movement member 22 of the first movement unit 20, and a pair of second screw shafts 26 are rotatably supported by the movement member 22. The second rails 25 and the second screw shafts 26 extend in the first direction 81. A second wheel 37 of the second movement unit 30 engages with the second rails 25, and an engagement part 36 of the second movement unit 30 engages with the second screw shafts 26. A second motor 26m rotates the second screw shafts 26 to thereby move the second movement unit 30 in the first direction 81.

The second movement unit 30 supports an upper part of the stretchable sheet discharger 32 to be swingable. The stretchable sheet discharger 32 swings between a first and second positions 32p and 32q indicated by broken lines 32p and 32q in Fig. 4 by a third motor 32m. The swinging of the stretchable sheet discharger 32 reciprocates the discharge port 32t provided in a lower part of the stretchable sheet discharger 32, along the placement region 6 in a second direction 82 orthogonal to the first direction 81. The discharge port 32t discharges the stretchable sheet 2 toward the placement region 6 in such a manner that the width direction of the stretchable sheet 2 is parallel to the first direction 81.

As shown in Fig. 9, the stretchable sheet discharger 32 has two conveyors 33a and 33b arranged in mirror symmetry to each other. The conveyors 33a and 33b each have an endless belt 33v circulating in a direction indicated by the arrow 33x along guide rollers 33p and 33q and a drive roller 33d. The stretchable sheet 2 is conveyed while being sandwiched between the endless belts 33v of the conveyors 33a and 33b, and is discharged in a direction indicated by the arrow 2x from the discharger 32t between end parts, on the downstream side in the conveyance direction, of facing parts of the endless belts 33v of the conveyors 33a and 33b. The drive rollers 33d of the conveyors 33a and 33b are rotated by conveyor motors 33m and 33n shown in Fig. 4.

The second movement unit 30 supports a plurality of second rollers 31a to 31g that define a second conveyance path 2q where the stretchable sheet 2 is conveyed from the discharge roller 40q of the track shifter 40 to the stretchable sheet discharger 32.

As shown in Fig. 5, the second movement unit 30 has, on each side of the stretchable sheet discharger 32 in the first direction 81, a pressing member 34 that returnably moves toward the placement region 6. For example, the pressing member 34 which is a plate-like member moves from a standby position 34p to a pressing position 34q as indicated by the chain lines 34p and 34q in Fig. 4 by the extension and contraction of an air cylinder 35 fixed to the second movement unit 30, and presses the stretchable sheet 2s folded on top of the pallet 5.

While the pressing members 34 may be provided in the first movement unit 20, providing them in the second movement unit 30 makes it easy to prevent the pressing member 34 from interfering with the stretchable sheet discharger 32. The pressing member 34 may be omitted.

When the second movement unit 30 moves in the first direction 81, the conveyance direction of the stretchable sheet 2 shifts in the width direction of the stretchable sheet 2. The track shifter 40 swings in response to this shift.

Specifically, as shown in Figs. 7 and 8, a guide member 42 curved in an arc shape is fixed to an upper surface 24a of an upper member 24 of the first movement unit 20 through a support member 41, and a third screw shaft 46 is rotatably supported by the upper member 24. The third screw shaft 46 extends in the first direction 81. As shown in Fig. 5, an engagement member 47 engages with the third screw shaft 46, and a protrusion 47a protruding upward is formed on the engagement member 47.

As shown in Figs. 7 and 8, two pairs of holding rollers 44a and 44b, and 44p and 44q that hold the arc-shaped guide member 42 from inside and outside in a radial direction are rotatably supported by a lower part on one end side of the frame 40k of the track shifter 40. As shown in Figs. 5 and 7, block-shaped holding members 48a and 48b that hold the protrusion 47a of the engagement member 47 from both sides in the first direction 81 are fixed to a lower part on the other end side of the frame 40k of the track shifter 40.

When the third screw shaft 46 is rotated by a third motor 46m, the engagement member 47 moves along the third screw shaft 46. In response thereto, the track shifter 40 swings as shown by the oblique lines 40a and 40b in Fig. 7, and the discharge roller 40q of the track shifter 40 moves in the first direction 81. At this time, the track shifter 40 swings about a predetermined position 40x at the center in the width direction of the reception roller 40p in such a manner that the center line of the stretchable sheet 2 that the reception roller 40p receives does not move, on the upstream side of the reception roller 40p.

In tandem with the movement of the second movement unit 30 in the first direction 81, the track shifter 40 swings in such a manner that the discharge roller 40q moves in the first direction 81. The swinging of the track shifter 40 twists the stretchable sheet 2. To absorb this twist, the first conveyance path 2p upstream of the track shifter 40 is bent by use of the first rollers 21a to 21c supported by the first movement unit 20, thereby making the first conveyance path 2p sufficiently long. The second conveyance path 2q from the track shifter 40 to the stretchable sheet discharger 32 is bent by use of the second rollers 31a to 31g supported by the second movement unit 30, thereby making the second conveyance path sufficiently long. By doing this, the stretchable sheet 2 can be stably conveyed even though the second movement unit 30 moves.

Bending the first and second conveyance paths 2p and 2q makes it possible to make the first and second conveyance paths 2p and 2q sufficiently long while the increase in dimensions such as the height and width of the stretchable sheet storing device 10 is suppressed.

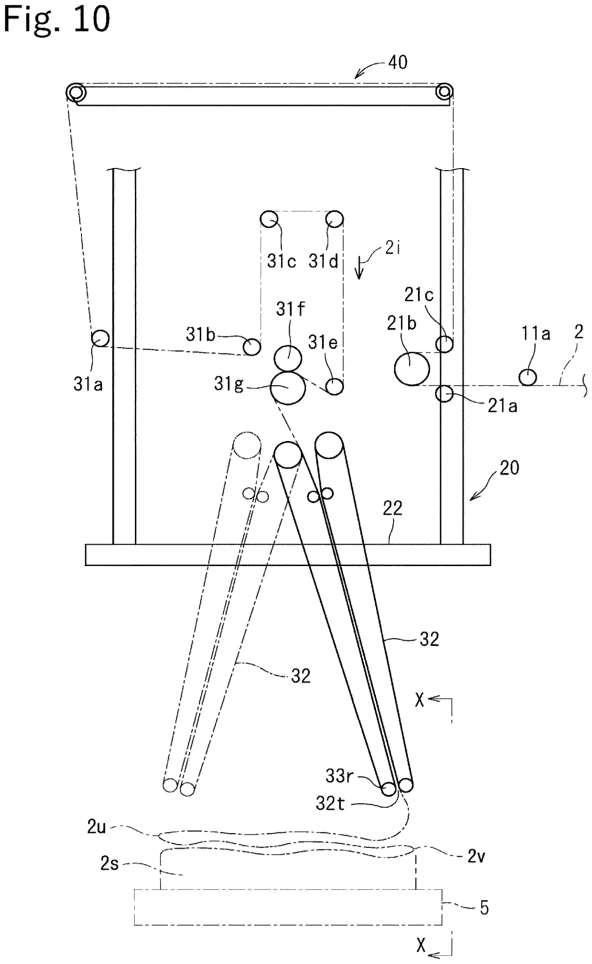

Next, the operation of the stretchable sheet storing device 10 will be described with reference to Figs. 10 through Fig. 12.

Fig. 10 is a schematic relevant part view showing the operation of the stretchable sheet storing device 10. As shown in Fig. 10, when the operation is started, the stretchable sheet discharger 32 repeatedly swigs between the position indicated by the solid line and the position indicated by the chain line. The stretchable sheet 2 which is conveyed in the direction indicated by the arrow 2i in the stretchable sheet storing device 10 passes through the stretchable sheet discharger 32, and is discharged from the discharge port 32t reciprocating in the second direction 82. By doing this, the stretchable sheet 2s is folded and stacked on top of the pallet 5 placed on the pallet placement device 16.

The first movement unit 20 is raised as appropriate so that the discharge port 32t of the stretchable sheet discharger 32 is away at an appropriate distance from the stretchable sheet 2s folded and stacked on top of the pallet 5. The pressing member 34 presses the stretchable sheet 2s folded and stacked on top of the pallet 5.

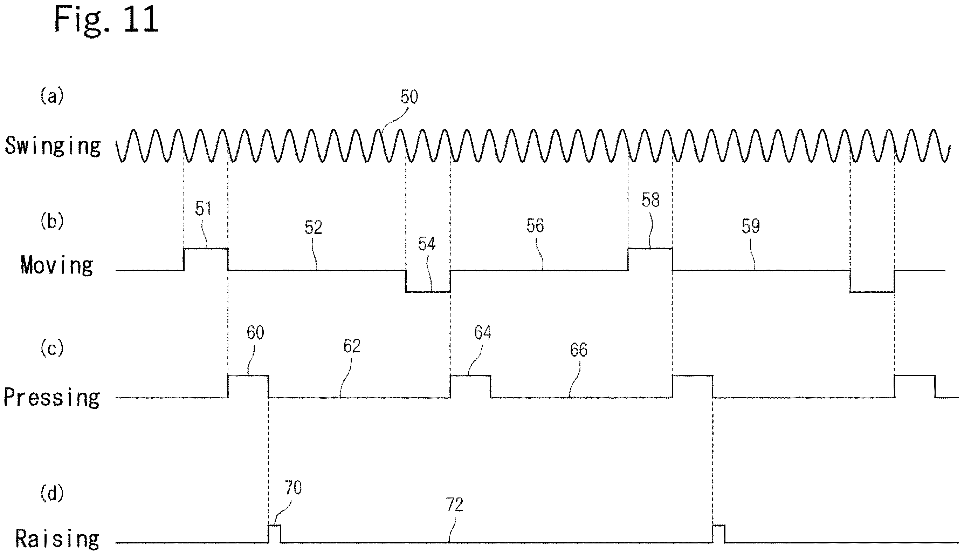

Fig. 11 is a timing chart showing an example of the operation of the stretchable sheet storing device 10. As shown by reference numeral 50 in Fig. 11, the stretchable sheet discharger 32 repeats a regular cycle of swinging. As shown by reference numeral 51, the second motor 26m rotates in one direction, so that the second movement unit 30 moves in the first direction 81.

Then, as shown by reference numeral 52, the second motor 26m stops rotating in one direction, so that the second movement unit 30 stops at a first position. When the stretchable sheet discharger 32 completes N1 cycles of swinging (N1=8 in Fig. 11) while the second movement unit 30 is stopping, as shown by reference numeral 54, the second motor 26m rotates in the reverse direction, so that the second movement unit 30 moves from the first position.

When the stretchable sheet discharger 32 completes K1 cycles of swinging (K1=2 in Fig. 11) while the second movement unit 30 is moving, as shown by reference numeral 56, the second motor 26m stops rotating in the reverse direction, so that the second movement unit 30 stops at a second position. When the stretchable sheet discharger 32 completes N2 cycles of swinging (N2=8 in Fig. 11) while the second movement unit 30 is stopping, as shown by reference numeral 58, the second motor 26m rotates in one direction, so that the second movement unit 30 moves from the second position.

Then, when the stretchable sheet discharger 32 completes K2 cycles of swinging (K2=2 in Fig. 11) while the second movement unit 30 is moving, as shown by reference numeral 59, the second motor 26m stops rotating in one direction, so that the second movement unit 30 stops at the first position. Similar operations are repeated thereafter.

N1, N2, K1 and K2 may be either natural numbers or positive real numbers other than natural numbers. N1 and N2 may be not equal to each other, and K1 and K2 may be not equal to each other.

It is preferable that N1 and N2 are large because the movement of the second movement unit 30 can be reduced. For example, when N1 is equal to or greater than 2 and N2 is equal to or greater than 2, the number of times of reciprocation of the discharge port 32t of the stretchable sheet discharger 32 in the second direction 82 along the placement region 6 while the second movement unit 30 is stopping at one position is two or more, so that the movement of the second movement unit 30 can be reduced.

In conjunction with the operation of the second movement unit 30, the first movement unit 20 is raised and the pressing member 34 operates as follows:

When the second movement unit 30 moves and stops at the first position, as shown by reference numeral 60, the air cylinder 35 is turned on, so that the pressing member 34 is lowered. Then, as shown by reference numeral 62, the air cylinder 35 is turned off, so that the pressing member 34 is raised to return to the original position.

Moreover, as shown by reference numeral 70, when the air cylinder 35 switches from on to off while the second movement unit 30 moves and stops at the first position, the first motor 14m is turned on, so that the first movement unit 20 is raised. Then, as shown by reference numeral 72, the first motor 14m is turned off, so that the first movement unit 20 stops.

When the second movement unit 30 moves and stops at the second position, as shown by reference numeral 64, the air cylinder 35 is turned on, so that the pressing member 34 is lowered. Then, as shown by reference numeral 66, the air cylinder is turned off, so that the pressing member 34 is raised.

Similarly, when the second movement unit 30 stops, the pressing member 34 is lowered. Moreover, each time the second movement unit 30 reciprocates between the first and second positions, the first movement unit 20 is raised.

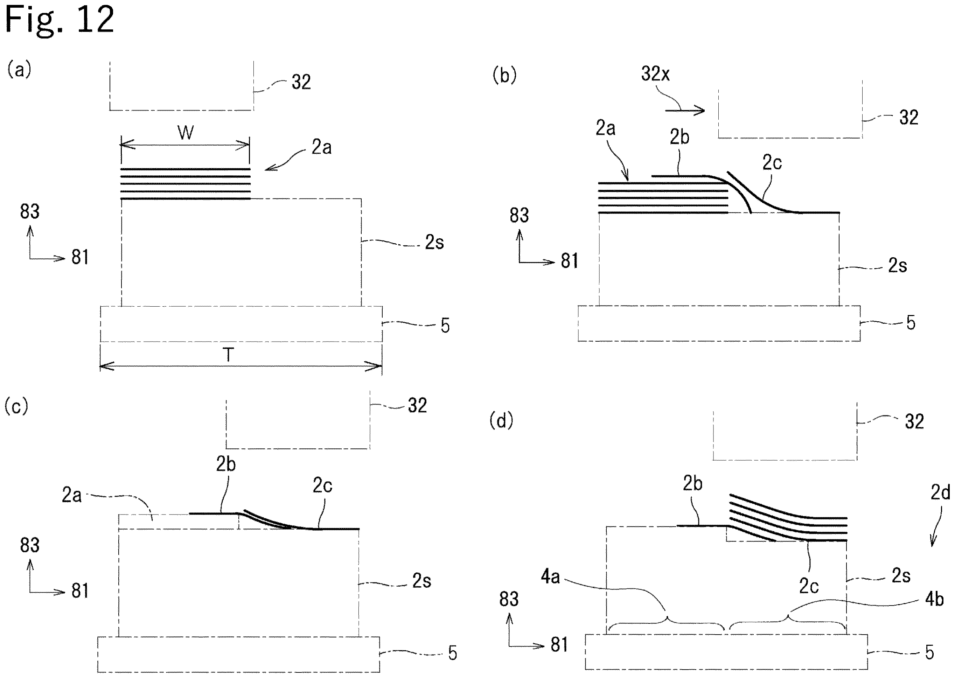

Fig. 12 which is a schematic view along the line X-X of Fig. 10 schematically show a bent part 2v of the stretchable sheet 2s folded and stacked on top of the pallet 5, by the solid lines 2a to 2d.

As shown in Fig. 12 (a), when the stretchable sheet discharger 32 swings while the second movement unit 30 is stopping at the first position, a first folded part 2a where the stretchable sheet is newly folded is formed on one side of the pallet 5 in the first direction 81.

Then, as shown in Fig. 12 (b), the stretchable sheet discharger 32 swings while moving in the direction indicated by the arrow 32x while the second movement unit 30 is moving from the first position to the second position, whereby first intermediate folded parts 2b and 2c where the stretchable sheet is newly folded are formed.

Then, as shown in Fig. 12 (c), when the second movement unit 30 stops at the second position, the pressing member 34 is lowered, so that the first folded part 2a is pressed to be compressed. For example, an undulating part between opposing folded parts 2u and 2v of a stretchable sheet 2k shown in Fig. 10 is pressed to be flattened. Although not shown in Fig. 12 (c), while this is being done, the stretchable sheet is newly folded on the other side of the pallet 5 in the first direction 81.

As shown in Fig. 12 (d), the stretchable sheet discharger 32 swings while the second movement unit 30 is stopping at the second position, whereby a second folded part 2d where the stretchable sheet is newly folded is formed on the other side of the pallet 5 in the first direction 81.

Although not shown, thereafter, second intermediate folded parts where the stretchable sheet is folded are similarly formed while the second movement unit 30 is moving from the second position to the first position. Then, when the second movement unit 30 stops at the first position, the pressing member 34 is lowered, so that the second folded part 2d is pressed to be compressed.

The second movement unit 30 stops at the first position and the second position in such a manner that the first folded part 2a and the second folded part 2d are adjacent to each other without overlapping. That is, the second movement unit 30 stops at a plurality of positions, that is, at the first position and the second position at a distance of not less than the width dimension W of the stretchable sheet 2 in the first direction 81.

When the width W of the stretchable sheet 2 is not more than half of the dimension T of the pallet 5 in the first direction 81, the parts 2a and 2d where the sheet is folded while the second movement unit 30 is stopping can be formed at a plurality of positions 4a and 4b on the pallet 5. The parts 2a and 2d where the sheet is folded while the second movement unit 30 is stopping are connected together through the parts 2b and 2c where the sheet is folded while the second movement unit 30 is moving, so that the stretchable sheet can be stacked higher than when the stretchable sheet is folded only at one position on the pallet 5. Therefore, by folding and stacking the stretchable sheet 2s at a plurality of positions 4a and 4b on the pallet 5, the frequency of exchanging the pallet 5 can be reduced more than when the stretchable sheet 2s is folded and stacked only at one position on the pallet 5.

For example, when the folded stretchable sheet 2s is undulating, the stretchable sheet 2s can be smoothed out by pressing the folded stretchable sheet 2s by the pressing member 34. By doing this, the stretchable sheet 2s can be stacked higher to thereby further increase the overall length of the stretchable sheet 2s that can be folded and stacked, so that the frequency of pallet exchange can be further reduced.

When the stacking of the stretchable sheet 2s is completed, the pallet 5 is taken out, and another pallet 5 is placed on the pallet placement device 16. Since it is unnecessary to raise the another pallet 5 placed on the pallet placement device 16 up to a predetermined height, the operation stop time accompanying the pallet exchange can be shortened.

When the width W of the stretchable sheet 2 is shorter, by stopping the second movement unit 30 at three or more positions, the part where the stretchable sheet is folded while the second movement unit 30 is stopping can be formed at three or more positions on the pallet 5. In this case, the second movement unit 30 also stops at a plurality of positions at a distance of not less than the width dimension W of the stretchable sheet in the first direction 81.

While in the first embodiment, a case is shown where the second direction 82 is orthogonal to the first direction 81, the stretchable sheet storing device 10 may have a structure where the second direction 82 is a direction crossing the first direction 81 which direction is other than a direction orthogonal to the first direction 81. While in the first embodiment, a case is shown where the stretchable sheet 2 is discharged from the discharge port 32t of the stretchable sheet discharger 32 in such a manner that the width direction of the stretchable sheet 2 coincides with the first direction 81, the stretchable sheet storing device 10 may have a structure where the stretchable sheet 2 is discharged from the discharge port 32t in such a manner that the width direction of the stretchable sheet 2 crosses the second direction 82 without coinciding with the first direction 81.

Moreover, the discharge port 32t of the stretchable sheet discharger 32 may be made to reciprocate in the second direction 82 without the stretchable sheet discharger 32 swinging, for example, by the stretchable sheet discharger 32 moving parallel in the second direction 82.

The stretchable sheet storing device 10 may be operated in various modes. For example, the first movement unit 20 may continue moving without repeating moving and stopping. The moving and stopping of the second movement unit 30 and the reciprocation of the discharge port 32t may be linked in various modes.

[Summary] As described above, the stretchable sheet 2 can be folded and stacked while being conveyed in a stretched state.

The present invention is not limited to the above-described embodiment but may be carried out with various modifications being added.

For example, the stretchable sheet discharger may have a structure where the stretchable sheet is held by rollers without the use of the endless belts. The stretchable sheet storing device may have a structure where stretchable sheets of various configurations are conveyed.

DESCRIPTION OF REFERENCE NUMERALS

2, 2e Stretchable sheet
4, 6 Sheet member
8 Resin film
10 Stretchable sheet storing device
21b Conveyance roller (conveyance roller on the upstream side in the conveyance direction)
31g Conveyance roller (conveyance roller on the downstream side in the conveyance direction)
32 Stretchable sheet discharger
32s Introduction port
32t Discharge port
$V_1$ to $V_3$ Conveyance speed

**Claims**

1. A stretchable sheet storing method comprising:

   a first conveying step in which a stretchable sheet is conveyed in a stretched state to an stretchable sheet discharger by using a conveyance roller that defines a conveyance speed of the stretchable sheet; and
   a second conveying step in which the stretchable sheet discharger conveys the stretchable sheet from an introduction port to a discharge port of the stretchable sheet discharger while holding both sides of the stretchable sheet in a first direction, and the discharge port of the stretchable sheet discharger reciprocates in the first direction to fold and stack the stretchable sheet discharged from the discharge port of the stretchable sheet discharger,
   wherein the conveyance speed when the stretchable sheet discharger conveys the stretchable sheet while holding the stretchable sheet in the second conveying step is lower than the conveyance speed when the conveyance roller conveys the stretchable sheet in the first conveying step.

2. The stretchable sheet storing method according to claim 1, wherein in the first conveying step, the stretchable sheet is conveyed along a conveyance path of the stretchable sheet by using a plurality of said conveyance rollers arranged with spacing between them, and a conveyance speed at which the conveyance roller on a downstream side in a conveyance direction conveys the stretchable sheet is made lower than a conveyance speed at which the conveyance roller on an upstream side in the conveyance direction conveys the stretchable sheet.

3. The stretchable sheet storing method according to claim 1 or 2, wherein in the second conveying step, the discharge port of the stretchable sheet discharger reciprocates in the first direction, and reciprocates in a third direction crossing the first direction and a second direction in which the stretchable sheet is conveyed while being held by the stretchable sheet discharger.

4. The stretchable sheet storing method according to any one of claims 1 to 3, further comprising a stretchable film forming step in which a resin film having elasticity is formed by extruding an elastic resin material whose main component is a thermoplastic elastic resin, in a state of being heated and melted and the stretchable sheet is formed by laminating the resin film in the stretched state and a sheet member.

5. The stretchable sheet storing method according to claim 4, wherein in the stretchable sheet forming step, the resin film in the stretched state and the sheet member are intermittently welded.

6. The stretchable sheet storing method according to claim 4 or 5, wherein in the stretchable sheet forming step, the stretchable sheet is formed by laminating the resin film and two of said sheet members so that the resin film is disposed between the sheet members.

7. A stretchable sheet storing device comprising:

   a conveyance roller that conveys a stretchable sheet and defines a conveyance speed of the stretchable sheet; and
   a stretchable sheet discharger that has an introduction port into which the stretchable sheet conveyed by the conveyance roller is introduced and a discharge port from which the stretchable sheet is discharged, and conveys the stretchable sheet from the introduction port to the discharge port while holding both sides of the stretchable sheet in a first direction, the discharge port reciprocating in the first direction so that the stretchable sheet discharged from the discharge port is folded and stacked,
wherein a conveyance speed at which the stretchable sheet discharger conveys the stretchable sheet is lower than a conveyance speed at which the conveyance roller conveys the stretchable sheet.

8. The stretchable sheet storing device according to claim 7, wherein a plurality of said conveyance rollers are arranged with spacing between them, and a conveyance speed at which the conveyance roller on a downstream side in a conveyance direction conveys the stretchable sheet is lower than a conveyance speed at which the conveyance roller on an upstream side in the conveyance direction conveys the stretchable sheet.

9. The stretchable sheet storing device according to claim 7 or 8, wherein the discharge port of the stretchable sheet discharger reciprocates in the first direction and reciprocates in a third direction crossing the first direction and a second direction in which the stretchable sheet is conveyed while being held by the stretchable sheet discharger.

10. The stretchable sheet storing device according to any one of claims 7 to 9, wherein the stretchable sheet includes: a resin film formed of an elastic resin material whose main component is a thermoplastic elastic resin and having elasticity; and a sheet member, the resin film and the sheet member being laminated.

11. The stretchable sheet storing device according to claim 10, wherein in the stretchable sheet, the resin film and the sheet member are intermittently welded.

12. The stretchable sheet storing device according to claim 10 or 11, wherein in the stretchable sheet, the resin film is disposed between two said sheet members.

EP 4 438 537 A1

# Fig. 1

# Fig. 2

# Fig. 3

(a)

(b)

# Fig. 4

# Fig. 5

# Fig. 6

# Fig. 7

EP 4 438 537 A1

# Fig. 8

# Fig. 9

# Fig. 10

Fig. 11

# Fig. 12

(a)

(b)

(c)

(d)

EP 4 438 537 A1

Fig. 13

## INTERNATIONAL SEARCH REPORT

| International application No. |
|---|
| **PCT/JP2022/047496** |

**A. CLASSIFICATION OF SUBJECT MATTER**

*B65H 29/04*(2006.01)i; *B65H 29/28*(2006.01)i; *B65H 45/101*(2006.01)i; *B65H 45/107*(2006.01)i
FI:    B65H45/107 E; B65H45/101 E; B65H29/04; B65H29/28

According to International Patent Classification (IPC) or to both national classification and IPC

**B. FIELDS SEARCHED**

Minimum documentation searched (classification system followed by classification symbols)
    B65H29/04; B65H29/28; B65H45/101; B65H45/107

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-41171 A (BRIDGESTONE CORP.) 01 March 2012 (2012-03-01)<br>entire text, all drawings | 1-12 |
| A | JP 2003-285971 A (FUJI XEROX CO., LTD.) 07 October 2003 (2003-10-07)<br>entire text, all drawings | 1-12 |
| A | JP 2021-134045 A (ZUIKO CORP.) 13 September 2021 (2021-09-13)<br>entire text, all drawings | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT<br>Information on patent family members | | | International application No.<br>**PCT/JP2022/047496** | |
|---|---|---|---|---|
| Patent document<br>cited in search report | Publication date<br>(day/month/year) | Patent family member(s) | Publication date<br>(day/month/year) |
| JP 2012-41171 A | 01 March 2012 | (Family: none) | |
| JP 2003-285971 A | 07 October 2003 | (Family: none) | |
| JP 2021-134045 A | 13 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020090753 A1

- JP 2012236704 A